# EUROPEAN PATENT SPECIFICATION

(11) **EP 0 671 534 B1**
(45) Date of publication and mention of the grant of the patent: **23.09.1998**
(21) Application number: 95102894.3
(22) Date of filing: 01.03.1995
(51) Int. Cl.: E06B 3/673

(54) **Method and machine for transporting insulating glass panes after sealing**
Verfahren und Vorrichtung zum Transport isolierende Verglasungen nach der Versiegelung
Procédé et dispositif pour transporter des vitrages isolants après le scellement

(30) Priority: 07.03.1994 IT TV940025
(43) Date of publication of application: 13.09.1995
(73) Proprietor: Vianello Fortunato - Davanzo Nadia, dba FOR.EL. BASE di Vianello Fortunato & C. S.n.c., 31056 Vallio di Roncade (Treviso) (IT)
(72) Inventor: Vianello, Fortunato, I-31056 Vallio Di Roncade (Treviso) (IT)
(74) Representative: Modiano, Guido, Dr.-Ing.

(56) References cited:
- GB-A- 1 102 983
- US-I- B 515 368

## Description

The present invention relates to a method and a machine for transporting insulating glass panes after sealing them.

Currently said glass panes are usually constituted by two glass sheets which are separated by a spacer frame which is coupled adhesively and hermetically to said sheets on its sides for example by means of a barrier gasket which is obtained by depositing butyl sealant which also acts as a vapor barrier.

Said spacer frame thus has a surface, also defined hereinafter as internal surface, that is directed towards the chamber formed by said frame and by the two glass sheets, and another surface, also termed hereinafter as outer surface, that is directed towards the perimetric edges of the two glass sheets.

Some space in fact remains between said perimetric edges of the two sheets and the outer surface of the spacer frame; sealant is applied to said space, and its main function is to provide mechanical strength and tightness to avoid any flow of air, gas and vapor in the chamber formed between the two glass sheets.

Specifically, the application of said sealant on the outer perimetric edge of the spacer frame entails problems linked to the transport of the pane, since said sealant is particularly tacky when freshly extruded.

Accordingly, the use for example of transport devices such as cylindrical rollers arranged so that their axes are at right angles to the axis along which the pane is transported would entail dirtying said roller immediately, which in turn would dirty the glass sheets or might remove the previously applied sealant from its seat.

The same occurs with conveyor belts.

Italian patent no. 1,138,767, filed on May 8, 1981, is known as a partial solution to this drawback; it claims an Austrian priority, application no. 8A4725/80 dated September 22, 1980, which discloses a device for transporting insulating glass panes which are slightly inclined with respect to the vertical and in which the edge joints are filled with putty, characterized in that the supports arranged in opposite pairs that move in the transport direction have supporting surfaces that are essentially horizontal and grip the glass sheets of the insulating pane from below and partially from the outside, specifically at the outer edges of said sheets, and in that freely rotating supporting rollers are provided on essentially vertical axes, the insulating glass pane resting against said freely rotating rollers at its upper edge.

However, even this solution has drawbacks which are essentially due to the fact that it is not easy to support the pane by confining the supporting action to part of the thickness of the sheets: possible breakages are in fact observed, especially when the supports move towards the glass sheets; in any case, said supports still become dirty, since the sealant is not always applied perfectly.

These problems increase as the thickness of the glass sheets that constitute the pane decreases.

Moreover, the machines comprising said devices require periodic complete replacement of the supports that support the glass sheets over part of their thickness due to the considerable wear to which they are subjected.

Furthermore, these drawbacks are worsened by the fact that said panes are usually transported at an angle of approximately 5-6^{o} with respect to the vertical.

A principal aim of the present invention is therefore to solve the described problems, eliminating the drawbacks of the described known art and thus providing a method and a machine that allow to safely transport insulating glass panes which are tilted by a few degrees with respect to the vertical after sealing at least the lower perimetric edge of said pane.

Within the scope of the above aim, an important object is to provide a method and a machine that allow said transport, after sealing, so as to keep the corresponding supporting and transport means clean.

Another important object is to provide a method and a machine in which the safety of the transport of the pane after sealing consists in that it is impossible to damage it, thus eliminating any production waste.

Another important object is to provide a method and a machine having a limited number of treatment stations or steps and a machine that does not require particular maintenance as regards the supporting and transport means.

Another important object is to provide a machine that is structurally simple and allows to maintain high productivity with respect to previous treatments.

Another object is to provide a method and a machine that allow to support and transport the panes after sealing, at the same time allowing said panes to be subjected to conventional and usual subsequent treatments after the catalysis of the sealant has completed.

This aim, these objects, and others which will become apparent hereinafter are achieved by a method for transporting insulating glass panes constituted by at least two glass sheets separated by a spacer frame which adheres hermetically to said two sheets at its sides after the deposition of sealant at the lower perimetric edge of said pane, characterized in that it comprises:
a first step for applying at least one film at least on said lower perimetric edge of said pane and
a second step for supporting and transporting said pane with said film applied thereon and
a third step for cutting said at least one film and
a fourth step for trimming said film; and a machine for transporting insulating glass panes after the deposition of sealant at said lower perimetric edge of said pane, characterized in that it comprises: a first station for applying at least one film at least on said lower perimetric edge of said pane; a second station for supporting and transporting said pane with said film applied thereon; a third cutting station for said film; and a fourth trimming station.

Further characteristics and advantages will become apparent from the following detailed description of a particular but not exclusive embodiment, illustrated only by way of non-limitative example in the accompanying drawings, wherein:
figure 1 is a side view of the machine and of its various components;
figure 2 is a front view of a pane with the film already associated therewith;

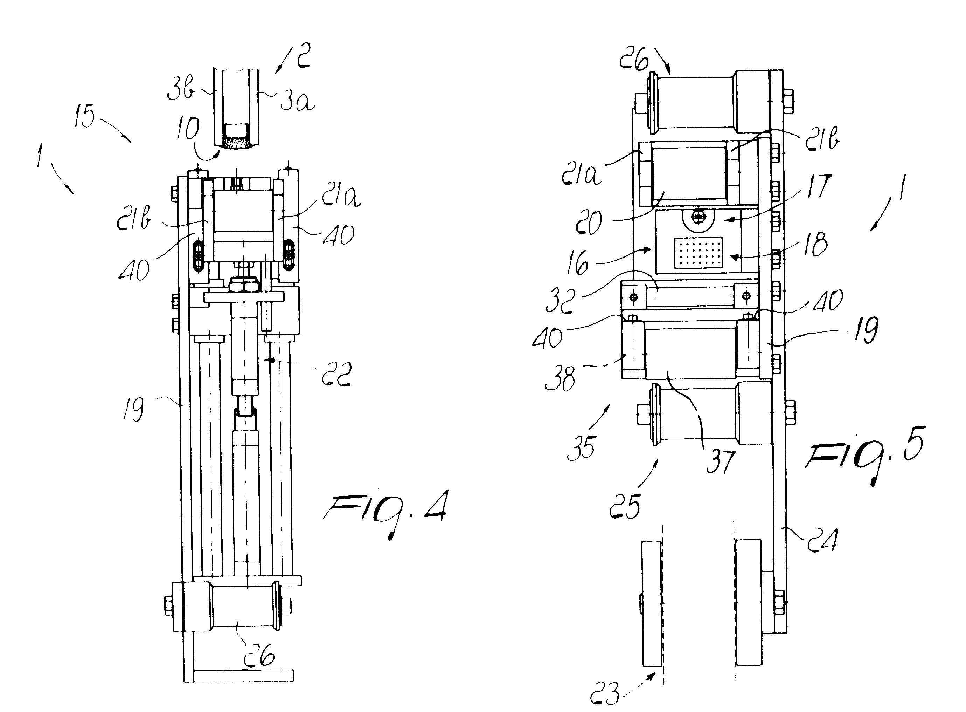

figure 3 is a view, similar to the preceding one, of a different configuration of the film;
figure 4 is a side view of the machine, taken at the pane access side after sealing;
figure 5 is a top view of the machine;
the subsequent figures illustrate the method and the machine during the various treatment steps: figure 6 illustrates the condition prior to the transit of the already sealed pane;
figure 7 is a schematic view of the first step of the application of the film at the corner of the pane;
figures 8, 9, and 10 illustrate the step for applying the film to the lower perimetric edge of the pane and the second step for supporting and transporting said pane once the film has been applied;
figures 11 and 12 illustrate the third step for cutting the film;

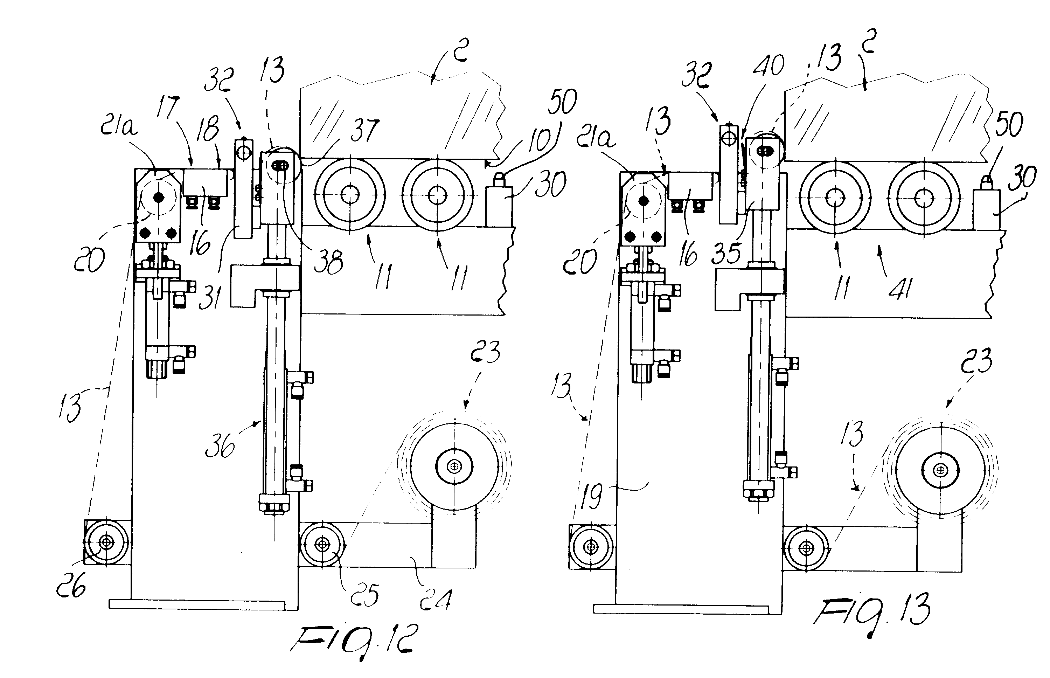

figure 13 is a view of the fourth step for trimming the film at the other corner of the pane.

With reference to the above figures, the reference numeral 1 designates the machine for transporting insulating glass panes 2 constituted by at least two sheets of glass, designated by the reference numerals 3a and 3b, which are arranged parallel to each other and separated by a spacer frame 4 having first lateral surfaces 5a and 5b that hermetically adhere to the facing surfaces of the sheets 3a and 3b by depositing butyl sealant, designated by the reference numerals 6a and 6b.

The spacer frame 4 furthermore has a second inner surface 7 which is directed towards the chamber 8 formed between the two sheets and a third outer surface 9 that is adjacent to the lower perimetric edge 10 of the pane 2 at which said pane is transported.

Said transport can occur by virtue of known means, such as for example conveyor belts or first fixed and/or motorized rollers 11 whose axis lies approximately at right angles to the axis of the motion of said pane.

The machine 1 is arranged downstream of a device that is suitable to apply sealant 12 at the gap between the third outer surface 9 of the spacer frame 4 and the lower perimetric edge 10 of the pane 2.

The method for transporting said panes entails a first step for applying at least one film 13 at the lower perimetric edge 10 of the pane on which the sealant 12 has already been applied and partially at fourth lateral surfaces 14a and 14b of the sheets 3a and 3b.

Said first step of the method is performed by a first station 15 constituted by a central unit 16 having, starting from the region where the pane is inserted along the directions for transporting it, a first nozzle 17 for expelling air or an appropriate gas or mixture and a second suction nozzle 18.

Said first and second nozzles are connected to a suitable pneumatic circuit, whereas the central unit is advantageously associated laterally with one end of a wall 19; the first and second nozzles are arranged at a plane that lies below the plane of arrangement of the lower perimetric edge 10 of the pane during its transport.

Upstream of the central unit 16 there is also a second roller 20 which is freely pivoted at a pair of first wings 21a and 21b between which said lower perimetric edge of said pane slides; said first wings are parallel to each other and to the wall 19 and are movable, by virtue of a suitable first actuator 22, along an axis at right angles to the pane transport axis.

This means that the second roller 20 has a rolling surface that is approximately parallel to the lower perimetric edge 10 of the pane and is movable towards it.

The film 13 can be of the shrink-wrap type or be made for example of polyethylene or in any case of an adequate material, and is wound in the direction of a suitable reel 23 which is supported by a suitable secondary frame 24 that is in turn coupled at the wall 19.

Starting from said reel 23, the film 13 is unwound so as to affect a third roller 25 and a fourth roller 26, both of which rotate freely and are located at the lower region of the wall 19; the film is then carried at the rolling surface of the second roller 20, accordingly arranging its loose end 27 at the region above the second suction nozzle 18, which is activated and retains said loose end.

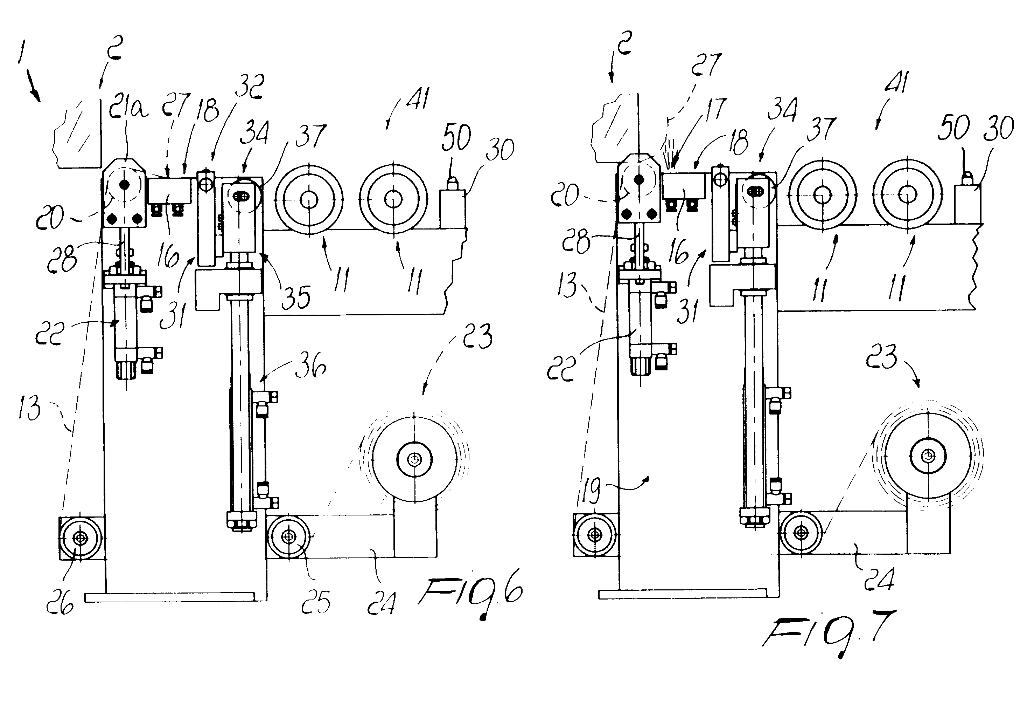

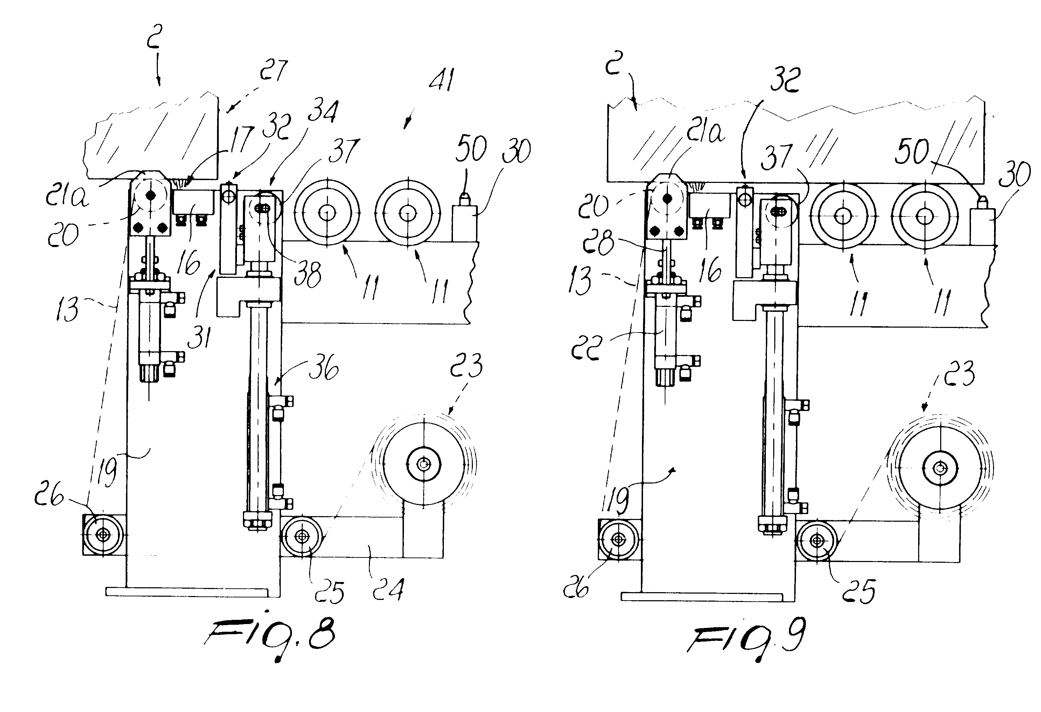

The method entails that when the pane approaches the first station 15, the second roller 20 rises by virtue of the presence, on said machine, of means for detecting the position of said pane proximate to said first station; said means, constituted by position sensors or other known means, are suitable to control the lifting of said second roller 20 so that it interacts with the lower perimetric edge 10 of the pane 2 on which the sealant 12 has already been applied, as shown in figures 6 and 7.

Suitable guides 28 keep the second roller in a stabilized position.

Then, simultaneously with the placement of the film 13 at the corner of the pane 2, as shown in figure 7, the second suction nozzle 18 is deactivated and the first nozzle 17 is activated; the first nozzle pushes the loose end 27 of the film 13, which is wider than said pane, so that it arranges itself on the corner of the pane, wrapping around it.

During the subsequent transport of the pane, shown in figures 8 and 9, the first nozzle 17 remains active, so as to force the film 13 to arrange itself both at the lower perimetric edge 10 of the pane and at the fourth lateral surfaces 14a and 14b of the sheets 3a and 3b, so that the lateral ends 29a and 29b of the film 13 affect a few centimeters of said sheets.

During said first step, the method furthermore includes the activation of the second step, during which the insulating pane is supported and transported by virtue of suitable transport means which constitute the second station 41; said means are constituted for example by the rollers 11, which are advantageously covered with elastic material, such as for example neoprene or the like, and do not become dirty with sealant 12 since the film 13, applied at the lower perimetric edge 10 and at the fourth lateral surfaces 14a and 14b of the pane 2, interacts with said rollers.

Upstream or downstream of the rollers 11 it is possible to provide means suitable to further ensure the grip of the film on the pane and in particular to arrange the lateral ends 29a and 29b of said film adjacent to the fourth lateral surfaces 14a and 14b of the sheets 3a and 3b; said means are constituted by additional rollers or by a plate 30 provided with a nozzle 50 for blowing air, which is optionally hot if the film is of the shrink-wrap type.

Said plate 30 can thus constitute an additional station of the machine and a further step in the method, specifically for folding the lateral ends of the film onto the sheets that constitute the pane.

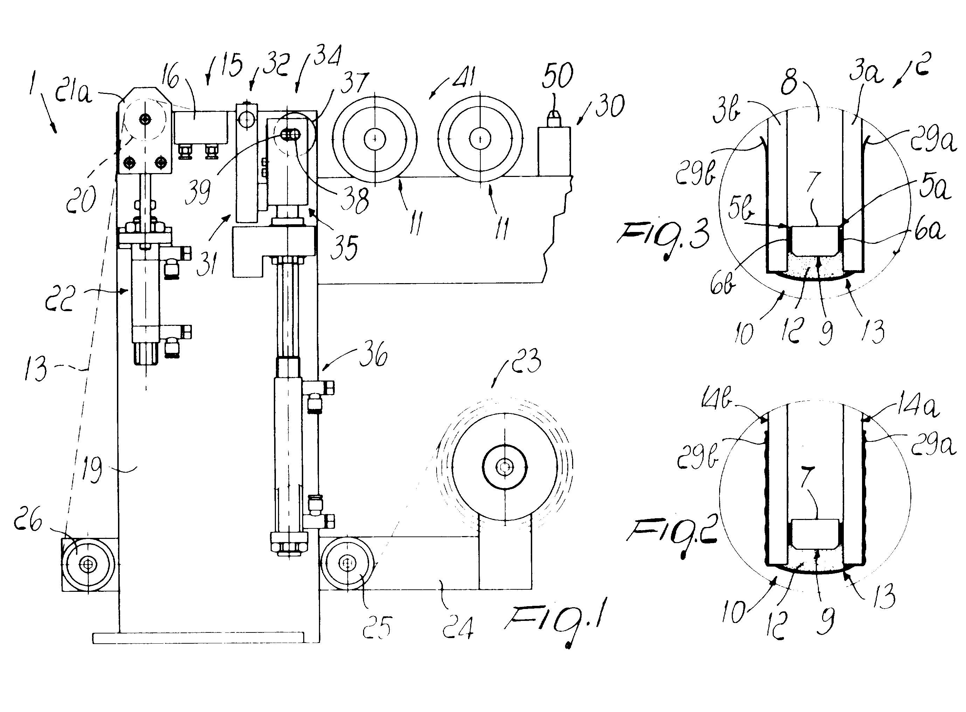

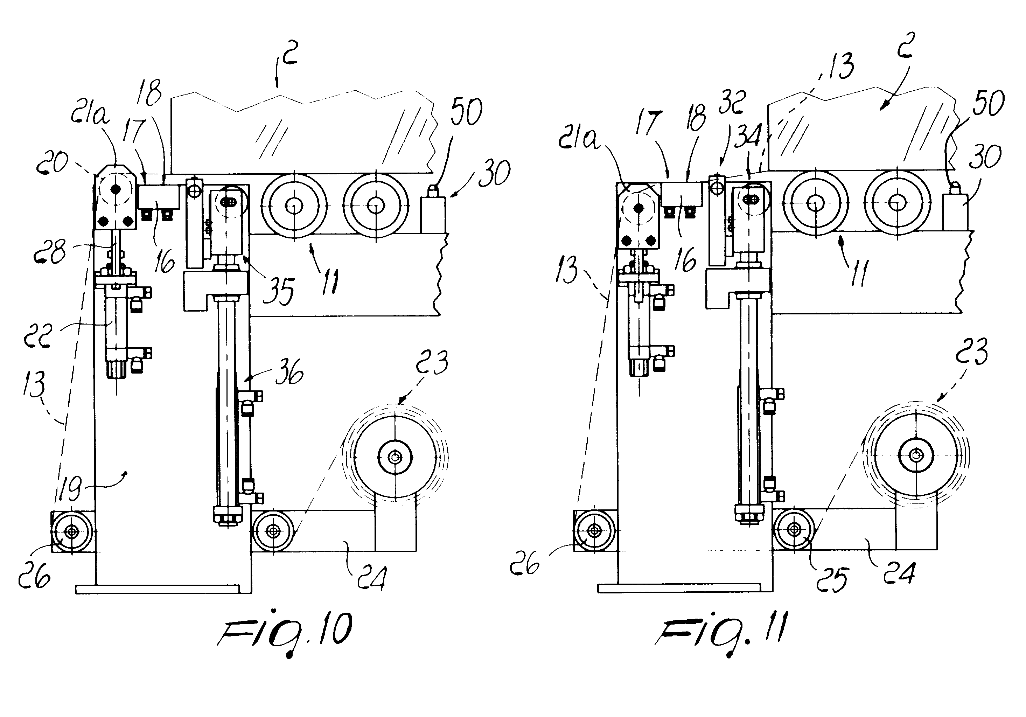

Once the pane 2, during its transport, has passed beyond the second roller 20, as shown in figure 10, the first nozzle 17 is deactivated, the second roller 20 is repositioned in the initial condition shown in figure 1, and the second suction nozzle 18 is activated, blocking the film 13 at the central unit 16.

The method then entails a third step for film cutting, which is performed by a third cutting station 31 that mechanically interrupts the film by cutting it physically with blades or by producing a thermal cut.

If thermal cutting is performed, the machine includes a heating cylinder 32 which is arranged transversely to the axis of the motion of the pane 2 in a region adjacent to the central unit 16; said heating cylinder is mounted on suitable posts 33 to move towards the overlying film and cut it.

The machine furthermore comprises means which are suitable to activate, simultaneously with said cutting of said film, the second nozzle 18, which thus blocks the new end of the film for subsequent application to another pane.

The method then entails a fourth step for trimming the film at the corner of the pane; said fourth step is performed by means of a fourth station 34 which is constituted by a box-like structure 35 arranged adjacent to the heating cylinder 32 and movable at right angles to the lower perimetric edge 10 of the pane 2 by virtue of a suitable second actuator 36 and of suitable registration guides.

Advantageously, the third cutting station 31 can also be combined at the box-like structure 35.

A fifth roller 37 is interposed proximate to the upper end of the box-like structure 35 and is arranged along an axis that lies at right angles to the axis of the motion of the pane; the pivot 38 of said roller is located in a suitable pair of slots 39 formed on said box-like structure along an axis that is parallel to the axis of the motion of the pane.

The optional movement of the fifth roller 37 occurs in contrast with a pair of flat springs 40 which are associated, at one end, at the box-like structure 35; suitable spacers interact with said springs and are associated with the end of the pivot 38.

This double movement allows the fifth roller 37 to turn over the end of the previously cut film 13 so as to wrap around the corner of the pane, accordingly achieving optimum trimming, fully preventing the sealant from making contact at the second pane supporting and transport station 41 constituted by the rollers 11.

If the exit angle of the insulating glass pane is different from 90°, the fourth station 34, and the fifth roller 37 therewith, also have a horizontal motion component, actuated by an appropriate mechanism, in order to follow the shape of the corner.

It has thus been observed that the method and the machine have allowed to transport an insulating glass pane, after the sealing step, in conditions that in no way dirty the transport and support means with the sealant, avoiding any breakage even if the pane is transported at an angle of a few degrees with respect to the vertical.

Since it is therefore possible to transport the pane even by means of rollers that fully affect its thickness, a machine is thus obtained that is maintenance-free as regards said means, since any limited wear thereof does not compromise at all the transport or support of the pane.

Furthermore, the application of the film allows the pane to be processed subsequently, for example for storing it, and the presence of the film is not a hindrance at all and indeed constitutes an element for further protecting the lower perimetric edge and the lower corners of the pane.

The method is very simple, and so is the machine from a structural point of view.

The invention is of course susceptible of numerous modifications and variations, all of which are within the scope of the same inventive concept as defined by the appended claims.

Thus the materials, as well as the dimensions that constitute the individual components of the invention, may also be the most pertinent according to the specific requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Machine for transporting insulating glass panes (2) after the deposition of sealant at a lower perimetric edge (10) of said pane, characterized in that it comprises: a first station (15) for applying at least one film (13) at least on said lower perimetric edge (10) of said pane (2); a second station (41) for supporting and transporting said pane (2) with said film (13) applied thereon; a third cutting station (31) for said at least one film (13); and a fourth trimming station (34).

2. Machine according to claim 1, particularly for transporting insulating glass panes constituted by at least two mutually parallel glass sheets (3a,3b) separated by a spacer frame (4) which has first lateral surfaces (5a,5b) that adhere hermetically to the facing surfaces of said sheets by virtue of the deposition of butyl sealant (6a,6b), said frame (4) having a second inner surface (7) which is directed towards a chamber (8) formed between said two sheets and a third outer surface (9) which is adjacent to the lower perimetric edge (10) of said pane (2), at which said pane (2) is transported, characterized in that said machine is arranged downstream of a known device that is suitable to deposit sealant (12) at the gap between said third outer surface (9) of said spacer frame (4) and said lower perimetric edge (10) of said pane (2).

3. Machine according to claim 2, characterized in that said first station (15) is constituted by a central unit (16) which has, starting from the region where said pane enters and in its transport direction, a first nozzle (17) for expelling air or a suitable gas or mixture, and a second suction nozzle (18).

4. Machine according to claim 3, characterized in that said first (17) and second (18) nozzles, which are connected to a suitable pneumatic circuit, are arranged at a plane that lies below the plane of arrangement of said lower perimetric edge (10) of said pane during its transport, said central unit (16) being advantageously associated laterally with one end of a wall (19).

5. Machine according to claim 4, characterized in that upstream of said central unit (16) there is a second roller (20) which is freely pivoted at a pair of first wings (21a,21b) which are arranged parallel to each other and to said wall (19), said lower perimetric edge (10) of said pane sliding between said first wings (21a,21b), said pair of first wings (21a,21b) being movable, by means of a suitable first actuator (22), along an axis that lies at right angles to the axis along which said pane (2) is transported.

6. Machine according to claim 5, characterized in that said second roller (20) has a rolling surface which is arranged approximately parallel to said lower perimetric edge (10) of said pane and is movable towards it.

7. Machine according to claim 1, characterized in that said film (13) is of the shrink-wrap type or is made of polyethylene or in any case of a suitable material and is wound at a suitable reel (23) that is supported by a suitable secondary frame (24) which is in turn coupled at said wall (19).

8. Machine according to claim 7, characterized in that said at least one film (13) is unwound starting from said reel (23) so as to affect a third (25) and a fourth (26) rollers which rotate freely and are located at the lower lateral regions of said wall (19), said film (13) being then arranged at the rolling surface of said second roller (20), the loose end (27) of said at least one film (13) being arrangeable at the region above said second suction nozzle (18), which is suitable to start operating to selectively retain said loose end of said at least one film (13).

9. Machine according to claim 5, characterized in that it comprises means for detecting the position of said pane (2) proximate to said first station (15), said means being suitable to lift said second roller (20), which is supported by suitable guides (28) in a stabilized position, said second roller (20) interacting, with said at least one film (13) interposed, with said lower perimetric edge (10) of said pane (2) on which sealant (12) has already been applied.

10. Machine according to claim 9, characterized in that simultaneously with the placement of said second roller (20) and thus of said at least one film (13) at the corner of said pane (2), said means deactivate said second suction nozzle (18) and activate said first nozzle (17).

11. Machine according to claim 10, characterized in that said first nozzle (17) is suitable to push the loose end (27) of said at least one film (13), which is wider than said pane (2), so that it wraps around the corner of said pane (2), partially surrounding fourth lateral surfaces (14a,14b) of said sheets (3a,3b).

12. Machine according to claim 11, characterized in that said first nozzle (17) remains active at least until said lower perimetric edge (10) of said pane (2) slides above it.

13. Machine according to claim 11, characterized in that said first nozzle (17) is suitable to position said at least one film (13) both at said lower perimetric edge (10) of said pane (2) and at part of said fourth lateral surfaces (14a,14b) of said sheets (3a,3b).

14. Machine according to claim 11, characterized in that said second station (41) comprises one or more conveyor belts or conveyors or one or more rollers (11) which are advantageously covered with elastic material, such as neoprene or the like, and interact with said at least one film (13) that wraps around said lower perimetric edge (10) and said fourth lateral surfaces (14a,14b) of said pane (2).

15. Machine according to claim 1, characterized in that said first station (15) is followed sequentially, along the direction in which said pane (2) advances, by said third station (31), by said fourth station (34) and by said second station (41).

16. Machine according to claim 11, characterized in that said first station (15) comprises a plate (30) provided with a nozzle (50) for blowing air, optionally hot air if said at least one film (13) is of the shrink-wrap type, said plate (30) being suitable to ensure the grip of said at least one film (13) on said lower perimetric edge (10) of said pane (2) and/or on said fourth lateral surfaces (14a,14b) of said sheets.

17. Machine according to claim 1, characterized in that said plate (30) is arranged after said fourth station (34) with reference to the advancement direction of said pane (2).

18. Machine according to claim 9, characterized in that said means for detecting the position of said pane proximate to said first station (15) are suitable to deactivate said first nozzle (17), lower said second roller (20), and activate said second suction nozzle (18), suitable to block said at least one film (13) at said central unit (16), when the entire pane (2) has passed beyond said second roller (20).

19. Machine according to claim 11, characterized in that upstream or downstream of said second station (41) it is possible to provide means suitable to further ensure the grip of said at least one film (13) on said pane (2) and in particular to arrange the lateral ends of said at least one film at the fourth lateral surfaces (14a,14b) of said sheets, said means being constituted by additional rollers or by a plate (30) for blowing air which is optionally hot if said at least one film (13) is of the shrink-wrap type.

20. Machine according to claim 1, characterized in that said third cutting station (31) for said film (13) is suitable to mechanically interrupt said film (13), said interruption occurring by means of blades or by performing a thermal cut.

21. Machine according to claim 20, characterized in that said thermal cut is achieved by means of a heating cylinder (32) which is arranged transversely to the axis of the motion of said pane (2) in a region that lies between said first station (15) and said third station (31), preferably in a region that is adjacent to said central unit (16), said heating cylinder (32) being mounted on suitable posts (33) so as to move it towards said overlying film in order to cut it.

22. Machine according to claim 20, characterized in that it comprises means suitable to activate, simultaneously with said cutting of said film (13), said second nozzle (18) to lock said film (13) for subsequent application on another pane (2).

23. Machine according to claim 1, characterized in that said fourth station (34) is constituted by a box-like structure (35) arranged in a region that is adjacent to said third station (31), said fourth station (34) being movable at right angles to said lower perimetric edge (10) of said pane (2) by virtue of means which are constituted by a suitable second actuator (36) and by suitable registration guides, a fifth roller (37) being interposed proximate to the upper end of said box-like structure (35), said fifth roller (37) being arranged along an axis that lies at right angles to the axis of the motion of said pane (2), the pivot (38) of said roller being located at a suitable pair of slots (39) formed on said box-like structure (35) along an axis that is parallel to the axis of motion of said pane (2).

24. Machine according to claim 23, characterized in that said fifth roller (37) has means suitable to allow it to also move in a reciprocating manner along the axis of the motion of said pane (2), said means being constituted by suitable spacers which are associated with the end of said pivot (38) and interact in contrast with a pair of flat springs (40) which are associated, at one end, at said box-like structure (35).

25. Machine according to claim 23, characterized in that said fourth station (34) comprises means that allow, if the exit angle of said also insulating glass pane (2) is different from 90^{o}, a horizontal motion component for said fifth roller (37), controlled by an appropriate mechanism, to follow the arrangement of said exit angle.

26. Method for transporting insulating glass panes (2) constituted by at least two glass sheets (3a,3b) separated by a spacer frame (4) which adheres hermetically to said two sheets (3a,3b) at its sides after the deposition of sealant (12) at the lower perimetric edge (10) of said pane (2), characterized in that it comprises:
a first step for applying at least one film (13) at least on said lower perimetric edge (10) of said pane (2) and
a second step for supporting and transporting said pane (2) with said at least one film (13) applied thereon and
a third step for cutting said at least one film (13) and
a fourth step for trimming said at least one film (13).

27. Method according to claim 26, characterized in that said first step entails the application of at least one film (13) at said lower perimetric edge (10) of said pane (2) on which the sealant (12) has already been applied and, partially, at the adjacent corners and at fourth lateral surfaces (14a,14b) of said sheets (3a,3b).

28. Method according to claim 27, characterized in that said first step includes the activation of said second step, in which said insulating pane (2) is supported and transported by virtue of suitable transport means during the application of said at least one film (13).

29. Method according to claim 27, characterized in that said first step for applying said at least one film (13) on said lower perimetric edge (10) of said pane (2) entails, after said third and fourth steps and optionally also after said second step, an additional step for positioning the lateral ends of said at least one film (13) on part of said fourth lateral surfaces (14a,14b) of said sheets (3a,3b).

30. Method according to claim 26, characterized in that it comprises, after the application of said at least one film (13) on said lower perimetric edge (10) of said pane (2), a fourth step for trimming said at least one film (13) at the corner of said pane (2).

## Patentansprüche

1. Maschine zum Transport von Isolierfensterscheiben (2) nach Aufbringen eines Dichtungsmittels an ihrer unteren Umfangskante, **gekennzeichnet** durch eine erste Station (15) zum Aufbringen mindestens eines Films (13) mindestens an der unteren Umfangskante (10) der Scheibe (2); eine zweite Station (41) zum Tragen und Transport der Scheibe (2) mit dem aufgebrachten Film (13); eine dritte Station (31) zum Schneiden des mindestens einen Films (13); und eine vierte Station (34) zum Trimmen.

2. Maschine nach Anspruch 1, insbesondere zum Transport von Isolierfensterscheiben aus mindestens zwei zueinander parallelen, durch einen Abstandsrahmen (4) voneinander getrennten Glasscheiben (3a, 3b), die hermetisch mit ihren einander gegenüberstehenden Flächen durch ein aufgebrachtes Butyldichtungsmittel (6a, 6b) an ersten Seitenflächen (5a, 5b) des Abstandsrahmens (4) anhaften, wobei der Rahmen (4) eine zweite, einer Kammer (8) zwischen den beiden Scheiben zugewandte innere Fläche (7) und eine dritte, äußere Fläche (9) hat, die der unteren Umfangskante (10) der Scheibe (2) zugewandt ist, an der diese transportiert wird, dadurch **gekennzeichnet,** daß die Maschine einer bekannten Einrichtung nachgeordnet ist, die ein Dichtungsmittel (12) an dem Spalt zwischen der dritten, äußeren Fläche (9) des Abstandsrahmens (4) und der unteren Umfangskante (10) der Scheibe (2) aufbringt.

3. Maschine nach Anspruch 2, dadurch **gekennzeichnet**, daß die erste Station (15) durch eine Zentraleinheit (16) gebildet ist, die ausgehend von dem Eintrittsbereich der Scheibe und in deren Transportrichtung eine erste Düse (17) zum Ausstoßen von Luft oder eines geeigneten Gases oder einer Mischung sowie eine zweite Düse (18) zum Ansaugen hat.

4. Maschine nach Anspruch 3, dadurch **gekennzeichnet,** daß die erste und die zweite Düse (17, 18) mit einem geeigneten pneumatischen Kreis verbunden und in einer unter der Ebene der unteren Umfangskante (10) der Scheibe bei deren Transport liegenden Ebene angeordnet sind, und daß die Zentraleinheit (16) vorteilhaft an einer Seite einer Wand (19) angeordnet ist.

5. Maschine nach Anspruch 4, dadurch **gekennzeichnet,** daß stromaufwärts der Zentraleinheit (16) eine zweite Rolle an zwei ersten Armen (21, 21b) frei schwenkbar ist, die parallel zueinander und zu der Wand (19) liegen, daß die untere Umfangskante (10) der Scheibe zwischen den ersten Armen (21a, 21b) gleitet, und daß die beiden ersten Arme (21a, 21b) durch einen geeigneten ersten Betätiger (22) längs einer rechtwinklig zur Transportrichtung der Isolierglasscheibe (2) liegenden Achse bewegbar sind.

6. Maschine nach Anspruch 5, dadurch **gekennzeichnet,** daß die zweite Rolle (20) eine Rollenfläche hat, die etwa parallel zur unteren Umfangskante (10) der Scheibe angeordnet und zu ihr hin bewegbar ist.

7. Maschine nach Anspruch 1, dadurch **gekennzeichnet,** daß der Film (13) ein Schrumpf-Wickelmaterial ist oder aus Polyethylen oder jedenfalls aus einem geeigneten Material besteht und auf eine Rolle (23) gewickelt ist, die mit einem geeigneten zweiten Rahmen (24) gehalten ist, der mit der Wand (19) gekoppelt ist.

8. Maschine nach Anspruch 7, dadurch **gekennzeichnet,** daß der mindestens eine Film (13) von der Rolle (23) abgezogen wird, um einer dritten (25) und einer vierten (26) Rolle zugeführt zu werden, die frei drehbar und an den unteren seitlichen Bereichen der Wand (19) angeordnet sind, daß der Film (13) dann auf der Rollenfläche der zweiten Rolle (20) angeordnet wird, und daß das lose Ende (27) des mindestens eines Films (13) in dem Bereich über der zweiten Düse (18) angeordnet werden kann, die geeignet ist, die Funktion zum wahlweisen Zurückhalten des losen Endes des mindestens einen Films (13) zu starten.

9. Maschine nach Anspruch 5, dadurch **gekennzeichnet,** daß sie Mittel zum Erfassen der Position der Scheibe (2) nahe der ersten Station (15) enthält, daß diese Mittel geeignet sind, die zweite Rolle (20) anzuheben, die durch geeignete Führungen (28) in stabiler Lage gehalten ist und unter Zwischenlage des mindestens eines Films (13) mit der unteren Umfangskante (10) der Scheibe (2), auf die das Dichtungsmittel (12) bereits aufgebracht ist, zusammenwirkt.

10. Maschine nach Anspruch 9, dadurch **gekennzeichnet,** daß gleichzeitig mit dem Anordnen der zweiten Rolle (20) und damit des mindestens einen Films (13) an der Kante der Scheibe (2) die genannten Mittel die zweite Düse (18) deaktivieren und die erste Düse (17) aktivieren.

11. Maschine nach Anspruch 10, dadurch **gekennzeichnet,** daß die erste Düse (17) geeignet ist, das lose Ende (27) des mindestens einen Films (13), das breiter als die Scheibe (2) ist, so zu beaufschlagen, daß es sich um die Kante der Scheibe (2) wickelt und vierte, seitliche Flächen (14a, 14b) der Glasscheiben (3a, 3b) teilweise umgibt.

12. Maschine nach Anspruch 11, dadurch **gekennzeichnet,** daß die erste Düse (17) mindestens so lange aktiv bleibt, bis die untere Umfangskante (10) der Scheibe (2) über sie gleitet.

13. Maschine nach Anspruch 11, dadurch **gekennzeichnet,** daß die erste Düse (17) geeignet ist, den mindestens einen Film (13) an der unteren Umfangskante (10) der Scheibe (2) und teilweise an den vierten, seitlichen Flächen (14a, 14b) der Glasscheiben (3a, 3b) zu positionieren.

14. Maschine nach Anspruch 11, dadurch **gekennzeichnet,** daß die zweite Station (41) ein oder mehrere Förderbänder oder Förderer oder eine oder mehrere Walzen (11) enthält, die vorteilhaft mit elastischem Material wie Neopren o.ä. beschichtet sind und mit dem mindestens einen Film (13) zusammenwirken, der um die untere Umfangskante (10) und die vierten, seitlichen Flächen (14a, 14b) der Scheibe (2) gewickelt ist.

15. Maschine nach Anspruch 1, dadurch **gekennzeichnet,** daß auf die erste Station (15) in Bewegungsrichtung der Scheibe (2) die dritte Station (31), die vierte Station (34) und die zweite Station (41) folgen.

16. Maschine nach Anspruch 11, dadurch **gekennzeichnet,** daß die erste Station (15) eine mit einer Düse (50) zum Blasen von Luft, wahlweise Heißluft bei einem Schrumpf-Wickelfilm (13), versehene Platte (30) ist, die geeignet ist, das Umgreifen der unteren Umfangskante (10) der Scheibe (2) und/oder der vierten, seitlichen Flächen (14a, 14b) der Glasscheiben sicherzustellen.

17. Maschine nach Anspruch 1, dadurch **gekennzeichnet,** daß die Platte (30) bezüglich der Bewegungsrichtung der Scheibe (2) der vierten Station (34) nachgeordnet ist.

18. Maschine nach Anspruch 9, dadurch **gekennzeichnet,** daß die Mittel zum Erfassen der Position der Scheibe nahe der ersten Station (15) zum Deaktivieren der ersten Düse (17), Absenken der zweiten Rolle (20) und Aktivieren der zweiten Düse (18) geeignet sind und zum Anhalten des mindestens einen Films (13) an der Zentraleinheit (16) geeignet sind, wenn die gesamte Scheibe (2) an der zweiten Rolle (20) vorbeigelaufen ist.

19. Maschine nach Anspruch 11, dadurch **gekennzeichnet,** daß stromaufwärts oder stromabwärts der zweiten Station (41) das Vorsehen von Mitteln möglich ist, die geeignet sind, das Umgreifen der Scheibe (2) mit dem mindestens einen Film (13) zu gewährleisten und insbesondere die Seitenkanten des mindestens einen Films an den vierten, seitlichen Flächen (14a, 14b) der Glasscheiben anzuordnen, und daß diese Mittel durch zusätzliche Walzen oder durch eine Platte (30) zum Blasen von Luft geeignet sind, die wahlweise Heißluft ist, wenn der mindestens eine Film (13) ein Schrumpf-Wickelfilm ist.

20. Maschine nach Anspruch 1, dadurch **gekennzeichnet,** daß die dritte Station (31) zum Schneiden des Films (13) zur mechanischen Unterbrechung des Films (13) geeignet ist, die durch Klingen oder durch einen Wärmeschnitt erfolgt.

21. Maschine nach Anspruch 20, dadurch **gekennzeichnet,** daß der Wärme schnitt durch einen Heizzylinder (32) erfolgt, der quer zur Bewegungsrichtung der Scheibe (2) in einem Bereich zwischen der ersten Station (15) und der dritten Station (31) angeordnet ist, vorzugsweise in einem Bereich, der der Zentraleinheit (16) benachbart ist, und daß der Heizzylinder (32) an Stützen (33) befestigt ist, die geeignet sind, ihn zu dem darüberliegenden Film zu bewegen, um diesen zu schneiden.

22. Maschine nach Anspruch 20, dadurch **gekennzeichnet,** daß sie Mittel zum Aktivieren der zweiten Düse (18) gleichzeitig mit dem Schneiden des Films (13) enthält, um den Film (13) zum nachfolgenden Aufbringen auf eine weitere Scheibe (2) anzuhalten.

23. Maschine nach Anspruch 1, dadurch **gekennzeichnet,** daß die vierte Station (34) eine kastenartige Struktur (35) hat und in einem der dritten Station (31) benachbarten Bereich angeordnet ist, daß die vierte Station (34) rechtwinklig zu der unteren Umfangskante (10) der Scheibe (2) durch Mittel bewegbar ist, die durch einen geeigneten zweiten Betätiger (36) und durch geeignete Ausrichfführungen gebildet sind, daß eine fünfte Rolle (37) nahe dem oberen Ende der kastenartigen Struktur (35) eingesetzt ist und längs einer Achse rechtwinklig zur Bewegungsrichtung der Scheibe (2) liegt, und daß das Schwenklager (38) der Rolle an einem geeigneten Paar Schlitze (39) angeordnet ist, die an der kastenartigen Struktur (35) längs einer Achse parallel zur Bewegungsrichtung der Scheibe (2) ausgebildet sind.

24. Maschine nach Anspruch 23, dadurch **gekennzeichnet,** daß die fünfte Rolle (37) Mittel hat, die ihre Hin- und Herbewegung parallel zur Bewegungsrichtung der Scheibe (2) erlauben, und daß diese Mittel durch geeignete Abstandselemente gebildet sind, die dem Ende des Schwenklagers (38) zugeordnet sind und mit zwei Blattfedern (40) zusammenwirken, die mit einem Ende an der kastenartigen Struktur (35) angeordnet sind.

25. Maschine nach Anspruch 23, dadurch **gekennzeichnet,** daß die vierte Station (34) Mittel enthält, die bei einem von 90° abweichenden Austrittswinkel der Isolierfensterscheibe (2) eine horizontale Bewegungskomponente für die fünfte Rolle (37) erlauben und durch einen geeigneten Mechanismus gesteuert sind, der geeignet ist, der Anordnung dieses Austrittswinkels zu folgen.

26. Verfahren zum Transport von Isolierfensterscheiben (2) aus mindestens zwei Glasscheiben (3a, 3b), die durch einen Abstandsrahmen (4) getrennt sind, welcher hermetisch an den beiden Glasscheiben (3a, 3b) mit seinen Seiten nach Aufbringen eines Dichtungsmittels (12) auf die untere Umfangskante (10) der Scheibe (2) anhaftet, **gekennzeichnet** durch folgende Schritte:
einen ersten Schritt zum Aufbringen mindestens eines Films (13) mindestens auf die untere Umfangskante (10) der Scheibe (2),
einen zweiten Schritt zum Tragen und Transportieren der Scheibe (2) mit dem aufgebrachten mindestens einen Film (13),
einen dritten Schritt zum Schneiden des mindestens einen Films (13) und
einen vierten Schritt zum Trimmen des mindestens einen Films (13).

27. Verfahren nach Anspruch 26, dadurch **gekennzeichnet,** daß der erste Schritt das Aufbringen mindestens eines Films (13) auf die untere Umfangskante (10) der Scheibe (2), auf die das Dichtungsmittel (12) bereits aufgebracht ist, und teilweise auf die benachbarten Kanten und auf vierte, seitliche Flächen (14a, 14b) der Glasscheiben (3a, 3b) umfaßt.

28. Verfahren nach Anspruch 27, dadurch **gekennzeichnet,** daß der erste Schritt das Aktivieren des zweiten Schritts enthält, bei dem die Isolierfensterscheibe (2) mit geeigneten Transportmitteln getragen und transportiert wird, während der mindestens eine Film (13) aufgebracht wird.

29. Verfahren nach Anspruch 27, dadurch **gekennzeichnet,** daß der erste Schritt zum Aufbringen des mindestens einen Films (13) auf die untere Umfangskante (10) der Scheibe (2) nach dem dritten und dem vierten und wahlweise auch nach dem zweiten Schritt einen zusätzlichen Schritt zum Positionieren der Seitenkanten des mindestens einen Films (13) teilweise auf den vierten, seitlichen Flächen (14a, 14b) der Glasscheiben (3a, 3b) umfaßt.

30. Verfahren nach Anspruch 26, dadurch **gekennzeichnet,** daß es nach dem Aufbringen des mindestens einen Films (13) auf die untere Umfangskante (10) der Scheibe (2) einen vierten Schritt zum Trimmen des mindestens einen Films (13) an der Kante der Scheibe (2) enthält.

## Revendications

1. Machine pour transporter des panneaux de verre isolants (2) après dépôt d'un agent d'étanchéité au niveau d'un bord périphérique inférieur (10) dudit panneau, caractérisée en ce qu'elle comporte : un premier poste (15) destiné à appliquer au moins un film (13) au moins sur ledit bord périphérique inférieur (10) dudit panneau (2), un deuxième poste (41) pour supporter et transporter ledit panneau (2) sur lequel est appliqué ledit film (13), un troisième poste de découpe (31) dudit au moins un film, et un quatrième poste d'ébavurage (34).

2. Machine selon la revendication 1, en particulier pour transporter des panneaux de verre isolants constitués par au moins deux feuilles de verre mutuellement parallèles (3a, 3b) séparées par un cadre écarteur (4) qui a des premières surfaces latérales (5a, 5b) qui adhèrent hermétiquement aux surfaces en vis-à-vis desdites feuilles du fait du dépôt d'un agent d'étanchéité butylique (6a, 6b), ledit cadre (4) ayant une seconde surface intérieure (7) qui est dirigée en direction d'une chambre (8) formée entre lesdites deux feuilles et une troisième surface extérieure (9) qui est adjacente au bord périphérique intérieur (10) dudit panneau (2), au niveau duquel ledit panneau (2) est transporté, caractérisée en ce que ladite machine est agencée en aval d'un dispositif connu qui est adapté pour déposer un agent d'étanchéité (12) au niveau de l'espace existant entre ladite troisième surface extérieure (9) dudit cadre écarteur (4) et ledit bord périphérique inférieur (10) dudit panneau (2).

3. Machine selon la revendication 2, caractérisée en ce que ledit premier poste (15) est constituée d'une unité centrale (16) qui a, en partant de la zone où ledit panneau pénètre, et dans sa direction de transport, une première buse (17) pour expulser de l'air ou un gaz ou un mélange adapté, et une seconde buse d'aspiration (18).

4. Machine selon la revendication 3, caractérisée en ce que lesdites première (17) et seconde (8) buses, qui sont reliées à un circuit pneumatique adapté, sont agencées au niveau d'un plan qui se trouve en dessous du plan d'agencement dudit bord périphérique intérieur (10) dudit panneau pendant son transport, ladite unité centrale (16) étant avantageusement associée latéralement à une extrémité d'une paroi (19).

5. Machine selon la revendication 4, caractérisée en ce qu'en amont de ladite unité centrale (16) il y a un second rouleau (20) qui pivote librement au niveau d'une paire de premières ailes (21a, 21b) qui sont agencées parallèlement l'une à l'autre et à ladite paroi (19), ledit bord périphérique inférieur (10) dudit panneau coulissant entre lesdites premières ailes (21a, 21b), ladite paire de premières ailes (21a, 21b) étant mobile, par l'intermédiaire d'un premier actionneur adapté (22), le long d'un axe qui se trouve à angle droit par rapport à l'axe le long duquel ledit panneau (2) est transporté.

6. Machine selon la revendication 5, caractérisée en ce que ledit second rouleau (20) a une surface de roulement qui est agencée approximativement parallèle audit bord périphérique inférieur (10) dudit panneau et est mobile vers celui-ci.

7. Machine selon la revendication 1, caractérisée en ce que ledit film (13) est du type rétractable ou est constitué de polyéthylène ou dans tous les cas d'un matériau adapté et est enroulé au niveau d'une bobine adaptée (23) qui est supportée par un cadre secondaire adapté (24) qui à son tour est relié à ladite paroi (19).

8. Machine selon la revendication 7, caractérisée en ce que ledit au moins un film (13) est déroulé en partant de ladite bobine (23) de manière à affecter un troisième (25) et un quatrième (26) rouleau qui tournent librement et sont situés au niveau des zones latérales inférieures de ladite paroi (19), ledit film (13) étant ensuite agencé au niveau de la surface de roulement dudit deuxième rouleau (20), l'extrémité libre (27) dudit au moins un film (13) pouvant être agencée au niveau de la zone située au-dessus de ladite seconde buse d'aspiration (18), qui est adaptée pour démarrer son fonctionnement pour retenir de manière sélective ladite extrémité libre dudit au moins un film (13).

9. Machine selon la revendication 5, caractérisée en ce qu'elle comporte des moyens pour détecter la position dudit panneau (2) à proximité dudit premier poste (15), lesdits moyens étant adaptés pour lever ledit deuxième rouleau (20), qui est supporté par des guides adaptés (28) dans une position stabilisée, ledit deuxième rouleau (20) interagissant, ledit au moins un film (13) étant interposé, avec ledit bord périphérique inférieur (10) dudit panneau (2) sur lequel un agent d'étanchéité (12) a déjà été appliqué.

10. Machine selon la revendication 9, caractérisée en ce que simultanément à la mise en place dudit deuxième rouleau (20) et donc dudit au moins un film (13) au niveau du coin dudit panneau (2), lesdits moyens désactivent ladite seconde buse d'aspiration (18) et activent ladite première buse (17).

11. Machine selon la revendication 10, caractérisée en ce que ladite première buse (17) est adaptée pour pousser l'extrémité libre (27) dudit au moins un film (13), qui est plus large que ledit panneau (2), de sorte qu'elle s'enroule autour du coin dudit panneau (2), en entourant partiellement des quatrièmes surfaces latérales (14a, 14b) desdites feuilles (3a, 3b).

12. Machine selon la revendication 11, caractérisée en ce que ladite première buse (17) reste active au moins jusqu'à ce que ledit bord périphérique inférieur (10) dudit panneau (2) coulisse au-dessus de celle-ci.

13. Machine selon la revendication 11, caractérisée en ce que ladite première buse (17) est adaptée pour positionner ledit au moins un film (13) à la fois au niveau dudit bord périphérique inférieur (10) dudit panneau (2) et au niveau d'une partie desdites quatrièmes surfaces latérales (14a, 14b) desdites feuilles (3a, 3b).

14. Machine selon la revendication 11, caractérisée en ce que ledit deuxième poste (41) comporte une ou plusieurs courroies de convoyeur ou un ou plusieurs convoyeurs ou un ou plusieurs rouleaux (11) qui sont revêtus avantageusement d'un matériau élastique, tel que du néoprène ou analogue, et interagissent avec ledit au moins un film (13) qui s'enroule autour dudit bord périphérique inférieur (10) et lesdites quatrièmes surfaces latérales (14a, 14b) dudit panneau (2).

15. Machine selon la revendication 1, caractérisée en ce que ledit premier poste (15) est suivi séquentiellement, le long de la direction dans laquelle avance ledit panneau (2), par ledit troisième poste (31), par ledit quatrième poste (34) et par ledit deuxième poste (41).

16. Machine selon la revendication 11, caractérisée en ce que ledit premier poste (15) comporte une plaque (30) munie d'une buse (50) pour souffler de l'air, l'air étant facultativement chaud si ledit au moins un film (13) est du type rétractable, ladite plaque (30) étant adaptée pour assurer la saisie dudit au moins un film (13) sur ledit bord périphérique inférieur (10) dudit panneau (2) et/ou sur lesdites quatrièmes surfaces latérales (14a, 14b) desdites feuilles.

17. Machine selon la revendication 1, caractérisée en ce que ladite plaque (30) est agencée après ledit quatrième poste (34) en référence à la direction d'avancé dudit panneau (2).

18. Machine selon la revendication 9, caractérisée en ce que lesdits moyens pour détecter la position dudit panneau à proximité dudit premier poste (15) sont adaptés pour désactiver ladite première buse (17), abaisser ledit second rouleau (20), et activer ladite seconde buse d'aspiration (18), adaptés pour bloquer ledit au moins un film (13) au niveau de ladite unité centrale (16), lorsque le panneau entier (2) est passé au-delà dudit deuxième rouleau (20).

19. Machine selon la revendication 11, caractérisée en ce qu'en amont ou en aval dudit deuxième poste (41) il est possible de prévoir des moyens adaptés pour assurer encore la saisie dudit au moins un film (13) sur ledit panneau (2) et en particulier d'agencer les extrémités latérales dudit au moins un film au niveau des quatrièmes surfaces latérales (14a, 14b) desdites feuilles, lesdits moyens étant constitués par des rouleaux supplémentaires ou par une plaque (30) pour souffler de l'air qui est facultativement chaud si ledit au moins un film (13) est du type rétractable.

20. Machine selon la revendication 1, caractérisée en ce que ledit troisième poste de découpe (31) dudit film (13) est adapté pour interrompre mécaniquement ledit film (13), ladite interruption survenant par l'intermédiaire de lames ou par réalisation d'une découpe thermique.

21. Machine selon la revendication 20, caractérisée en ce que ladite découpe thermique est obtenue par l'intermédiaire d'un cylindre chauffant (32) qui est agencé transversalement à l'axe du mouvement dudit panneau (2) dans une zone qui se trouve entre ledit premier poste (15) et ledit troisième poste (31), de préférence dans une zone qui est adjacente à ladite unité centrale (16), ledit cylindre chauffant (32) étant monté sur des poteaux adaptés (33) de manière à se déplacer en direction dudit film surplombant afin de le couper.

22. Machine selon la revendication 20, caractérisée en ce qu'elle comporte des moyens adaptés pour activer, simultanément à ladite découpe dudit film (13), ladite seconde buse (18) pour bloquer ledit film (13) pour une application ultérieure sur un autre panneau (2).

23. Machine selon la revendication 1, caractérisée en ce que ledit quatrième poste (34) est constitué d'une structure (35) analogue à un caisson agencée dans une zone qui est adjacente audit troisième poste (31), ledit quatrième poste (34) étant mobile à angle droit par rapport audit bord périphérique inférieur (10) dudit panneau (2) du fait de moyens qui sont constitués par un second actionneur adapté (36) et par des guides de calage adaptés, un cinquième rouleau (37) étant interposé à proximité de l'extrémité supérieure de ladite structure analogue à un caisson (35), ledit cinquième rouleau (37) étant agencé le long d'un axe qui se trouve à angle droit par rapport à l'axe du mouvement dudit panneau (2), le pivot (38) dudit rouleau étant situé au niveau d'une paire de fentes adaptées (39) formée sur ladite structure analogue à un caisson (35) le long d'un axe qui est parallèle à l'axe du mouvement dudit panneau (2).

24. Machine selon la revendication 23, caractérisée en ce que ledit cinquième rouleau (37) a des moyens adaptés pour lui permettre de se déplacer aussi d'une manière en va-et-vient le long de l'axe du mouvement dudit panneau (2), lesdits moyens étant constitués par des écarteurs adaptés qui sont associés à l'extrémité dudit pivot (38) et interagissent en opposition avec une paire de ressorts plats (40) qui sont associés, à une extrémité, à ladite structure analogue à un caisson (35).

25. Machine selon la revendication 23, caractérisée en ce que ledit quatrième poste (34) comporte des moyens qui permettent, si l'angle de sortie dudit panneau de verre (2), aussi isolant, est différent de 90°, à une composante de déplacement horizontale dudit cinquième rouleau (37), commandée par un mécanisme approprié, de suivre l'agencement dudit angle de sortie.

26. Procédé pour transporter des panneaux de verre isolants (2) constitués par au moins deux feuilles de verre (3a, 3b) séparées par un cadre écarteur (4) qui adhère hermétiquement sur lesdites deux feuilles (3a, 3b) au niveau de ses côtés après dépôt d'un agent d'étanchéité (12) au niveau du bord périphérique inférieur (10) dudit panneau (2), caractérisé en ce qu'il comporte :
une première étape destinée à appliquer au moins un film (13) au moins sur ledit bord périphérique inférieur (10) dudit panneau (2), et
une deuxième étape pour supporter et transporter ledit panneau (2), ledit au moins un film (13) étant appliqué sur celui-ci, et
une troisième étape pour découper ledit au moins un film (13) et
une quatrième étape pour ébavurer ledit au moins un film (13).

27. Procédé selon la revendication 26, caractérisé en ce que ladite première étape implique l'application d'au moins un film (13) au niveau dudit bord périphérique inférieur (10) dudit panneau (2) sur lequel l'agent d'étanchéité (12) a déjà été appliqué et, partiellement, au niveau des coins adjacents et au niveau des quatrièmes surfaces latérales (14a, 14b) desdites feuilles (3a, 3b).

28. Procédé selon la revendication 27, caractérisé en ce que ladite première étape comporte l'activation de ladite deuxième étape, dans laquelle ledit panneau isolant (2) est supporté et transporté en vertu de moyens de transport adaptés pendant l'application dudit au moins un film (13).

29. Procédé selon la revendication 27, caractérisé en ce que ladite première étape pour appliquer ledit au moins un film (13) sur ledit bord périphérique inférieur (10) dudit panneau (2) implique, après lesdites troisième et quatrième étapes et de manière facultative aussi après ladite deuxième étape, une étape supplémentaire pour positionner les extrémités latérales dudit au moins un film (13) sur une partie desdites quatrièmes surfaces latérales (14a, 14b) desdites feuilles (3a, 3b).

30. Procédé selon la revendication 26, caractérisé en ce qu'il comporte, après l'application dudit au moins un film (13) sur ledit bord périphérique inférieur (10) dudit panneau (2), une quatrième étape pour ébavurer ledit au moins un film (13) au niveau du coin dudit panneau (2).
